# EUROPÄISCHE PATENTSCHRIFT

(11) **EP 0 603 796 B1**
(45) Veröffentlichungstag und Bekanntmachung des Hinweises auf die Patenterteilung: **04.12.1996**
(21) Anmeldenummer: 93120531.4
(22) Anmeldetag: 20.12.1993
(51) Int. Cl.: F02N 17/047

(54) **Flammstartanlage für eine Verbrennungseinrichtung**
Flame starting system for internal combustion device
Installation de démarrage par flamme pour dispositif de combustion interne

(30) Priorität: 23.12.1992 DE 4243959
(43) Veröffentlichungstag der Anmeldung: 29.06.1994
(73) Patentinhaber: BERU Ruprecht GmbH & Co. KG, D-71636 Ludwigsburg (DE)
(72) Erfinder: Eller, Martin, D-71640 Ludwigsburg (DE); Peters, Odd, D-74321 Bietigheim-Bissingen (DE)
(74) Vertreter: WILHELMS, KILIAN & PARTNER Patentanwälte

(56) Entgegenhaltungen:
- EP-A- 0 317 922
- DE-A- 3 706 555
- DE-A- 4 032 758
- PATENT ABSTRACTS OF JAPAN vol. 9, no. 272 (M-425) 30. Oktober 1985 & JP-A-60 116 869 (DAIHATSU KOGYO) 24. Juni 1985

## Beschreibung

Die Erfindung betrifft eine Flammstartanlage für eine Verbrennungseinrichtung, insbesondere eine Brennkraftmaschine zum Vorwärmen der Verbrennungsluft mit einer Flammglühkerze, die im Ansaugluftkanal der Verbrennungseinrichtung angeordnet ist, Kraftstoff- und Stromversorgungseinrichtungen für die Flammglühkerze und einer Steuer- oder Regeleinrichtung zum Steuern oder Regeln der Kraftstoff- und Stromversorgung der Flammglühkerze.

Eine derartige Flammstartanlage ist aus der DE 40 32 758 A1 bekannt und dient insbesondere dazu, einen Kaltstart von Brennkraftmaschinen wie beispielsweise Dieselmotoren, Ottomotoren, Methanol- und Ethanolmotoren mit und ohne Ladeluft sowie von Verdampferbrennern zu ermöglichen. Sie wird insbesondere bei Dieselmotoren wie beispielsweise direkt einspritzenden Dieselmotoren für den LKW-Einsatz verwendet, um bei tiefen Temperaturen von beispielsweise unter -10°C einen sicheren Start des Motors zu gewährleisten.

Um einen sicheren Start einer mit einer derartigen Flammstartanlage ausgerüsteteten Verbrennungseinrichtung, insbesondere einer Brennkraftmaschine, zu ermöglichen, ist es allerdings erforderlich, daß die Flammstartanlage fehlerfrei arbeitet. Bei den bisher bekannten Flammstartanlagen führen Fehler in der Funktion dazu, daß die Flammstartanlage als Starthilfe ausfällt und daher ein Starten bei niedrigen Außentemperaturen nicht möglich ist.

Die der Erfindung zugrundeliegende Aufgabe besteht daher darin, die Flammstartanlage der eingangs genannten Art so auszubilden, daß ihre einwandfreie Funktion jederzeit gewährleistet werden kann.

Diese Aufgabe wird gemäß der Erfindung durch die Ausbildung gelöst, die im Kennzeichen des Patentanspruchs 1 angegeben ist.

Die erfindungsgemäße Flammstartanlage ist somit so ausgebildet, daß sie auf ihre einwandfreie Funktion überwacht wird und einer Funktionskontrolle unterworfen wird, um einen sicheren Start der Verbrennungseinrichtung, insbesondere der zugehörigen Brennkraftmaschine, zu ermöglichen und ggfs. bei rechtzeitiger Erkennung und Anzeige einer Funktionsstörung entsprechende Maßnahmen einzuleiten.

Besonders bevorzugte Ausführungsformen der erfindungsgemäßen Flammstartanlage sind Gegenstand der Patentansprüche 2 bis 10.

Im folgenden werden anhand der zugehörigen Zeichnung besonders bevorzugte Ausführungsbeispiele der Erfindung näher beschrieben. Es zeigen
Fig. 1 ein Ausführungsbeispiel der erfindungsgemäßen Flammstartanlage in einem schematischen Diagramm,
Fig. 2 die Anordnung der Flammglühkerze und der Überwachungssensoren bei dem in Fig. 1 dargestellten Ausführungsbeispiel und
Fig. 3a und 3b in einem Flußdiagramm die Arbeitsabfolge bei der in Fig. 1 dargestellten Flammstartanlage.

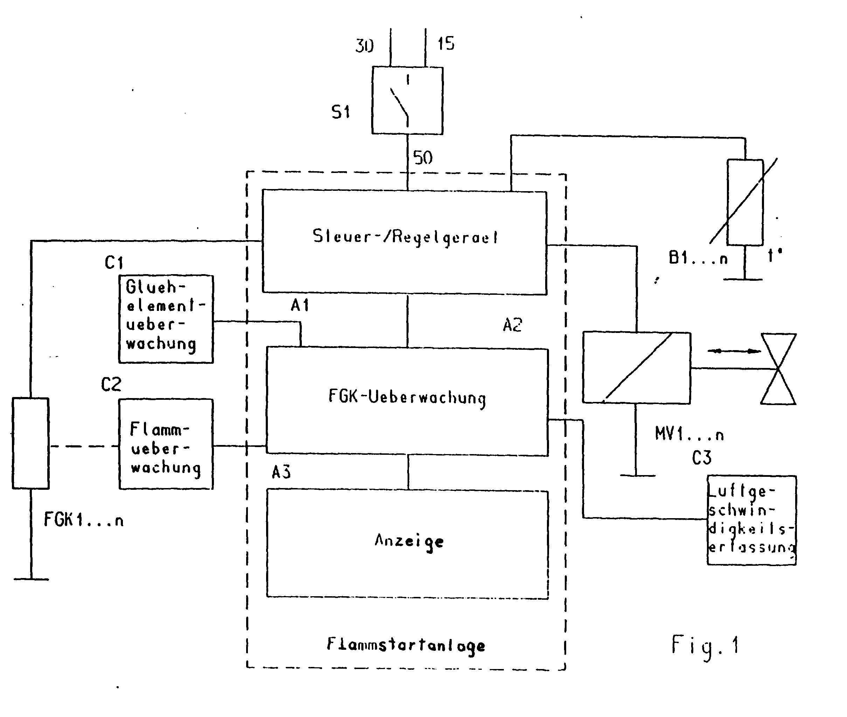

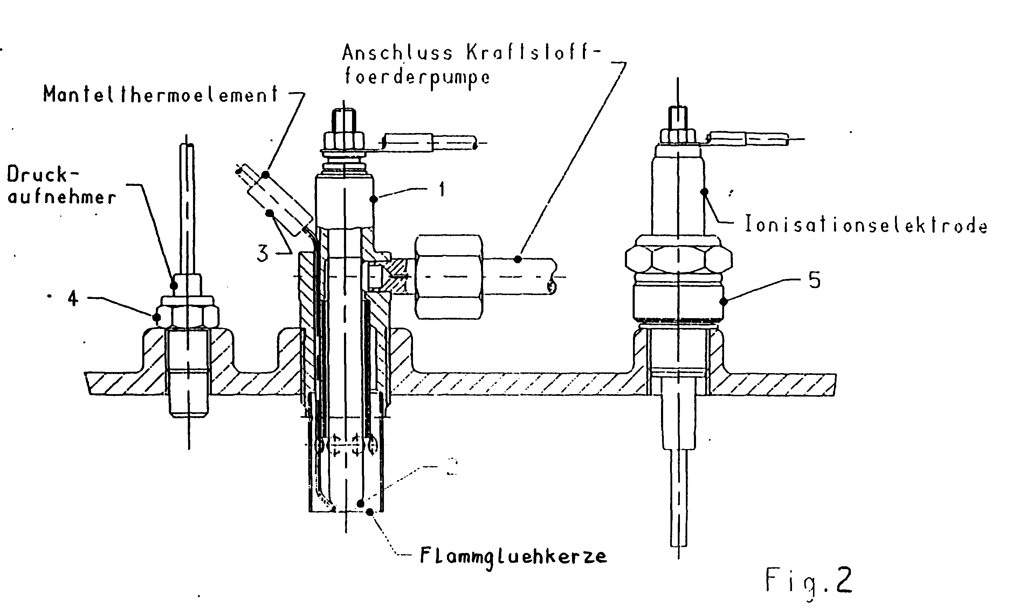

Wie es in Fig. 1 dargestellt ist, umfaßt eine Flammstartanlage wenigstens eine Flammglühkerze FGK1...n, die in der in Fig. 2 dargestellten Weise im Luftansaugkanal einer Verbrennungseinrichtung, insbesondere einer Brennkraftmaschine, angeordnet ist, Kraftstoff- und Stromversorgungseinrichtungen MV1...n und S1 für die Flammglühkerze FGK1...n und eine Steuereinrichtung A1, über die die Kraftstoff- und Stromversorgung der Flammglühkerze FGK1...n gesteuert wird.

Die Steuereinrichtung A1 ist mit einer Überwachungseinrichtung A2 verbunden, an der die Ausgangssignale eines Glühelementüberwachungssensors C1 und eines Flammüberwachungssensors C2 liegen. Die Überwachungseinrichtung A2 ist mit einer Anzeigeeinrichtung A3 zum Anzeigen des Überwachungsergebnisses verbunden. Die Anzeige kann z.B. als Lichtsignal oder über eine Anzeigetafel erfolgen.

Es ist weiterhin ein Luftgeschwindigkeitssensor C3 vorgesehen, der die Luftgeschwindigkeit oder den Luftdurchsatz im Ansaugluftkanal ermittelt und ein entsprechendes Signal an die Überwachungseinrichtung A2 legt, die daraufhin die Steuereinrichtung A1 so betreibt, daß die Flammglühkerzen FGK1...n mit einer Kraftstoffmenge versorgt werden, die der Luftgeschwindigkeit oder Luftmenge im Luftansaugkanal entspricht. Temperatursensoren B1...n dienen zur Ermittlung der Außentemperatur bzw. der Kühlwassertemperatur, und sind mit der Steuereinrichtung A1 verbunden.

Wenn bei der in Fig. 1 dargestellten Flammstartanlage die elektrische Energieversorgung S1 durch Schließen des Schalters, beispielsweise des Zündschloßschalters, angeschaltet wird, dann wird die Steuereinrichtung A1 der Anlage aktiviert. Über die Temperatursensoren B1...n wird die Kühlwassertemperatur bzw. die Umgebungslufttemperatur abgefragt, wobei dann, wenn diese Temperatur einen bestimmten Wert unterschreitet, die Steuereinrichtung A1 die Glühelemente der Flammglühkerzen FGK1...n mit Strom versorgt.

In den letzten Jahren sind die Anforderungen an Flammstartanlagen stetig gestiegen. Während bisher derartige Anlagen lediglich bei tiefen Umgebungstemperaturen von beispielsweise -10°C bei direkt einspritzenden Dieselmotoren bis zum Start der Brennkraftmaschine eingesetzt wurden, wobei über bis zu 60 Sekunden vorgeglüht werden mußte, bevor die Flammglühkerze gezündet werden konnte , ist es heutzutage angestrebt, Flammstartanlagen bei jedem Start der Brennkraftmaschine einzusetzen, wobei ein Vorglühen der Flammglühkerze über eine kurze Zeit von beispielsweise weniger als 10 Sekunden möglich sein soll und die Flammstartanlage auch bei laufendem Motor in Betrieb sein soll. Das heißt, daß ein Nachflammen von bis zu ca. 8 Minuten möglich sein soll. Auch in diesem Nachflammbetrieb, d.h. bei laufendem Motor, sollen die Betriebsbedingungen der Flammglühkerzen so gesteuert oder geregelt werden, daß ein Flammabriß oder ein Ausfall der Flammglühkerzen, beispielsweise durch Überhitzung des Glüh- oder Heizelementes, vermieden wird.

Der Grund für diese Erweiterung des Betriebsbereiches von Flammstartanlagen besteht in der Verschärfung der gesetzlichen Bestimmungen bezüglich der Reinheit des Abgases. Flammstartanlagen dienen somit auch dazu, den Schadstoffgehalt des Abgases nach dem Start einer Brennkraftmaschine herabzusetzen.

Als Temperatursensoren B₁...n für die Abfrage der Kühlwasser und/oder Umgebungstemperatur werden temperaturabhängige Widerstände mit positivem oder negativem Temperaturkoeffizienten eingesetzt. Wenn die Steuereinrichtung A1 einen betriebskalten Motor, beispielsweise eine Kühlwassertemperatur unter 60°C sowie eine Umgebungstemperatur von beispielsweise unter 20°C feststellt, dann werden die Glühelemente der Flammglühkerzen, beispielsweise über Halbleiterschaltelemente, durchgeschaltet, d.h. mit Strom versorgt.

Falls die Flammstartanlage bei jedem Start des Motors eingesetzt werden soll, kann auf die Messung der Kühlwasser und/oder Umgebungstemperatur auch verzichtet werden.

Die Funktion der Flammglühkerze insbesondere ihres Glühelementes oder Heizstabes wird über den Glühelementüberwachungssensor C1 kontrolliert. Sobald der Glühelementüberwachungssensor C1 eine korrekte Funktion des Glühelementes festgestellt hat, wird die Kraftstofförderpumpe MV1...n angeschaltet. Vorzugsweise ist die Fördermenge von der Taktfrequenz der Ansteuerung abhängig, wobei pro Arbeitshub eine konstante Kraftstoffmenge gefördert wird und die Taktfrequenz über den Luftgeschwindigkeitssensor C3, d.h. über die im Luftansaugkanal herrschende Luftgeschwindigkeit, geregelt wird. Es sind auch kontinuierlich fördernde Kraftstoffpumpen mit entsprechender Ansteuerung einsetzbar.

Die Entflammung und die Flamme werden durch den Flammüberwachungssensor C2 kontrolliert.

In der Überwachungseinrichtung A2 werden die eingehenden Sensorsignale logisch verknüpft, damit bei auftretenden Funktionsfehlern oder Ausfällen einer Flammglühkerze FGK1...n diese an der Anzeige A3 angezeigt werden können. Bei einer Nichtentflammung einer Flammglühkerze FGK1...n kann auch ein wiederholter Start durch die Steuereinrichtung A1 eingeleitet werden, wenn keine Funktionsfehler erkannt werden. Die erkannten Funktionsfehler werden an der Anzeige A3 entweder optisch angezeigt und/oder in einem Fehlerspeicher abgespeichert, der ausgelesen werden kann.

In Fig. 2 sind im einzelnen eine Flammglühkerze 1 sowie ein Mantelthermoelement 3 als Glühelementüberwachungssensor und eine Jonisationselektrode 5 als Flammüberwachungssensor dargestellt.

Das Glühelement 2 der Flammglühkerze 1 besteht z.B. aus einem Keramikheizstab und vorzugsweise aus einem mit einem Isolierstoff, z.B. MgO gefüllten Glührohr aus zunderfreiem Material, in dem wenigstens eine Heizwendel mit hohem spezifischem Widerstand und geringer Änderung des Widerstandes über die Temperatur (maximal 3 bis 5 %) sowie wenigstens eine Regelwendel aus einem Material mit einem positiven Temperaturkoeffizienten eingebettet sind. Die Heizwendel sitzt in der Spitze des Heizstabes, während die Regelwendel in Reihe zur Heizwendel geschaltet ist.

Die Glühelementüberwachung ist durch eine Erfassung der Temperatur des Glühelementes möglich, wofür es mehrere Möglichkeiten gibt.

Eine Möglichkeit besteht darin, Thermoelemente vorzusehen, die in die Flammglühkerze integriert sind. Dazu eignen sich insbesondere Mantelthermoelemente, die in eine Hülle aus zunderfreiem Material eingebettet sind. Diese Mantelthermoelemente sollten an einer günstigen Stelle des Glühelementes, d.h. an der heißesten Stelle, angebracht sein und keinen elektrischen Kontakt mit dem Glühelement haben. Ein guter Wärmekontakt zum Glühelement sollte sichergestellt sein. Das ist durch eine Schweißverbindung des Mantels des Mantelthermoelementes an das Glührohr des Glühelementes erreichbar.

Ein Beispiel eines derartigen Mantelthermoelementes 3 ist in Fig. 2 dargestellt. Das Thermoelement 3 ist nach hinten durch den Körper der Flammglühkerze 1 hindurchgeführt und über ein Kabel mit der Steuereinrichtung A1 verbunden.

Bei Glühelementen, die aus Heiz- und Regelwendeln bestehen, wobei die Regelwendel in Reihe zur Heizwendel geschaltet ist und einen positiven Temperaturkoeffizienten aufweist (z.B. aus Nickel, Eisen, CoFe) kann auch über eine Widerstandsmessung auf die Temperatur des Glühelementes geschlossen werden. Dabei werden sowohl der Gesamtwiderstand als auch die Einzelwiderstände, z.B. über einen Abgriff an der Schweißstelle zwischen der Regel- und der Heizwendel, abgefragt, wobei der Widerstandsverlauf der Regelwendel aufgenommen wird.

Das Glühelement wird anfangs mit einer Einschaltdauer von 100 % aufgeheizt. Falls über das Thermoelement oder über eine Widerstandsmessung keine Temperaturerhöhung innerhalb einer gewissen Zeitspanne, z.B. 10 Sekunden festgestellt werden kann, wird auf einen Ausfall des Glühelementes geschlossen. Sobald festgestellt wird, daß die Isttemperatur gleich der Solltemperatur ist, wird das Glühelement getaktet mit Strom versorgt und erfolgt nach einem P-, PI-, PID-, Zweipunkt- oder Mehrpunktregelalgorithmus eine Regelung auf die Solltemperatur. Das Taktverhältnis liegt dabei zwischen 0 und 100 % der Einschaltdauer.

Möglich wäre auch eine Steuerung, bei der das Impuls-Pausen-Verhältnis in Stufen umschaltbar ist und größere Temperaturdifferenzen gegenüber der Solltemperatur zugelassen sind. Das Glühelement darf allerdings nicht mit Heizleistungen beaufschlagt werden, die zur Zerstörung der Heiz- oder Regelwendel führen. Dies kann insbesondere dann der Fall sein, wenn der Heizstab durch starke Ansaugluftbewegungen, beispielsweise im Motorbetrieb oder durch nicht entzündeten Kraftstoff, äußerlich stark abgekühlt wird. Dadurch wird das Thermoelement 3, das am Glührohr außen aufgeschweißt ist, eine zu niedrige Temperatur anzeigen und dem mit einer Erhöhung des Taktverhältnisses entgegenzuwirken trachten. Das hat eine Erhöhung der Heizleistung zur Folge. Gleichzeitig wird die Regelwendel mit positivem Temperaturkoeffizienten im Widerstandswert absinken und einen erhöhten Stromfluß durch die Heiz- und Regelwendeln zulassen. Dadurch nimmt der Wendelwiderstand ab. Da der Wärmeübergangswiderstand die Wärmekapazität der Einbettisolierung und des Glührohres nicht beliebig große Wärmemengen pro Zeiteinheit nach außen an die Glührohrwandung leiten können, besteht die Gefahr einer Überhitzung, insbesondere der Heizwendel der Flammglühkerze. Die Heizleistung wird daher auf einen maximalen Wert beschränkt, bei dem die Heiz- und Regelwendeln nicht beschädigt werden können.

Nach Erreichen der Solltemperatur, die zum Entflammen des Kraftstoffes ausreicht, wird die Kraftstoffversorgung durch die Steuereinrichtung A1 eingeschaltet. Die erforderliche Kraftstoffmenge wird dabei über eine Luftmengenmessung errechnet.

Die Kontrolle der Entflammung und der Flamme der Flammglühkerze erfolgt über den Flammüberwachungssensor C2.

Als Flammüberwachungssensor C2 bieten sich Ionisationselektroden an, die eine Entflammung anzeigen können. Derartige Ionisationselektroden können entweder in die Flammglühkerzen FGK1...n integriert werden oder am Ansaugtrakt der Brennkraftmaschine installiert sein, wie es in Fig. 2 dargestellt ist. Wenn die Ionisationselektroden am Ansaugtrakt in einem bestimmten Abstand von den Flammglühkerzen FGK1...n installiert sind, der der Mindestflammweite bei optimaler Verbrennung des Luftkraftstoffgemisches entspricht, dann kann eine Aussage über den Zustand der Flammglühkerzen FGK1...n gemacht werden, da bei schlechter Gemischbildung diese Mindestflammweite nicht erreicht wird.

Als Sensoren kommen Bimetallstreifen, die bei Erwärmung durch die Flamme elektrische Kontakte auslösen, aber auch Sensorelemente mit positiven und negativen Temperaturkoeffizienten in Frage, deren Widerstandswert von der Temperatur abhängt. Es können auch Thermoelemente, die die Temperaturerhöhung durch die Flamme anzeigen, sowie optische Sensoren verwandt werden, die auf die Lichteinwirkung der Flamme reagieren.

Ein Beispiel eines Flammüberwachungssensors in Form einer Ionisationselektrode 5 ist in Fig. 2 im einzelnen dargestellt. Die Ionisationselektrode 5 ist in einem gewählten Abstand von der Flammglühkerze 1 im Ansaugtrakt der Brennkraftmaschine angebracht. Sie zeigt der Steuereinrichtung A1, ob eine genügende Flammenbildung stattfindet. Wie erwähnt, sollte der Abstand der Ionisationselektrode 5 von der Flammglühkerze 1 so gewählt sein, daß er der Mindestflammweite entspricht. Brennt die Flamme im Extremfall nur noch innerhalb der Flammglühkerze, dann kann es auch sinnvoll sein, die Ionisationselektrode direkt integriert in der Flammglühkerze vorzusehen.

Die Flammerkennung erfolgt, um einen Flammenabriß, insbesondere bei höheren Luftgeschwindigkeiten im Motorbetrieb bis zum höchstmöglichen Last- und Drehzahlpunkt zu verschieben. Bei steigender Luftgeschwindigkeit verkürzt sich die Flammenweite aufgrund des hohen Luftüberschusses. Dem kann dadurch entgegengewirkt werden, daß die Kraftstoffversorgung passend zur Luftmenge und analog die Stromversorgung der Flammglühkerze erhöht werden. Entsteht trotzdem ein Flammenabriß, so werden von der Steuereinrichtung geeignete Maßnahmen ergriffen, um eine sofortige Neuentflammung einzuleiten. Dazu wird die Glühtemperatur über das Thermoelement abgefragt, um bei zu niedriger Temperatur infolge der Abkühlung durch Kaltblasen bei höheren Luftgeschwindigkeiten oder durch nicht verdampften Kraftstoff die Heizleistung zu erhöhen, bis eine ausreichende Zündtemperatur erreicht ist. Es kann auch von Vorteil sein, zeitweise keinen Kraftstoff zuzuführen, um das Aufheizen zu erleichtern. Danach wird die Kraftstoffpumpe eingeschaltet, um entsprechend dem Signal vom Luftsensor 4 der Flammglühkerze 1 Kraftstoff zuzuführen, bis die Ionisationselektrode 5 ein Flammensignal abgibt.

Fehlt nach einer vorgegebenen Zeitspanne das Flammensignal, dann erscheint eine Fehlermeldung und wird ein Neustart durchgeführt, wobei der Temperaturzustand des Heizstabes berücksichtigt wird, so daß der Heizstab der Flammglühkerze nicht überhitzt wird. Auftretende Fehler werden in der Anzeige A3 entweder über Lampensignale angezeigt oder in einem Fehlerspeicher abgespeichert, um bei einer routinemäßigen Inspektion ausgelesen zu werden. Dabei wird zwischen Fehlern, die sich auf die Funktion der Flammglühkerze beziehen, und Fehlern unterschieden, die im Betrieb aufgrund äußerer Einflüsse auftreten können und Betriebsstörungen darstellen. Bei einem erkannten Ausfall einer Flammglühkerze erkennt das Thermoelement 3 keine Temperaturerhöhung durch das Glühelement, so daß die Flammstartanlage abgeschaltet wird und z.B. über ein entsprechendes akustisches oder optisches Signal dieser Fehler angezeigt wird.

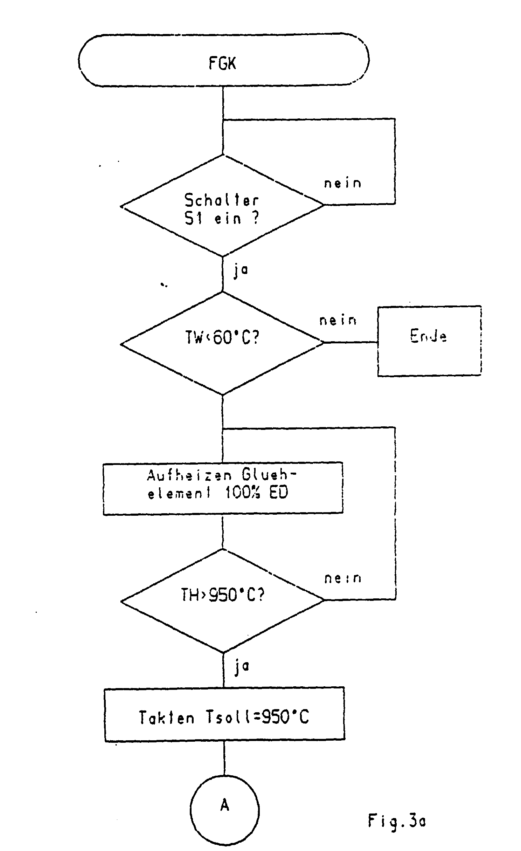

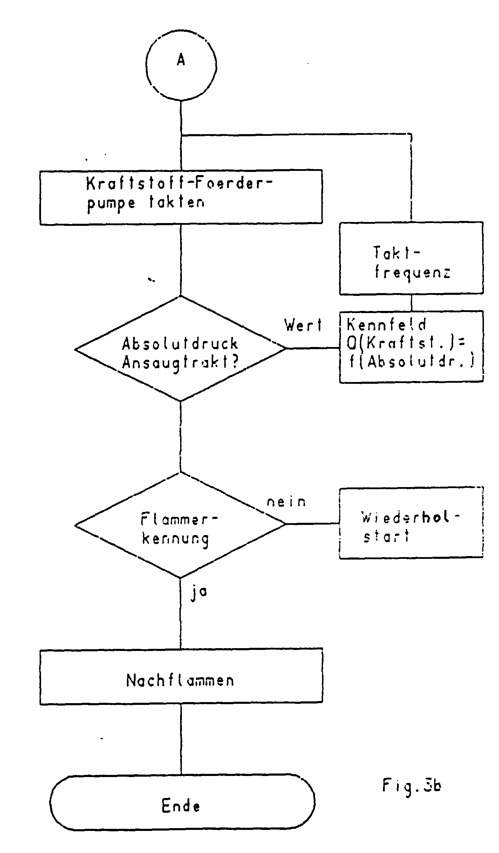

In den Fig. 3a und 3b ist die obige Arbeitsabfolge in Form eines logischen Flußdiagramms dargestellt.

Fig. 3a zeigt, daß nach dem Einschalten des Schalters S1 ermittelt wird, ob die Betriebstemperatur unter 60°C liegt. Wenn das der Fall ist, erfolgt ein Aufheizen des Glühelementes mit einer Einschaltdauer von 100 %, bis die Entzündungstemperatur der Flammglühkerze von z.B. 950°C erreicht ist. Anschließend wird die Flammglühkerze getaktet mit Strom versorgt und auf eine Temperatur gleich 950°C geregelt.

Fig. 3b zeigt die Taktung der Kraftstofförderpumpe in Abhängigkeit vom Absolutdruck im Ansaugtrakt über eine entsprechende Ansteuertaktfrequenz, die nach Maßgabe eines gespeicherten Kraftstoff-Absolutdruckkennfeldes festgelegt wird. Die nachgeschaltete Flammenerkennung führt bei negativem Ergebnis zu einem Wiederholstart, während bei positivem Ergebnis auf den Nachflammbetrieb übergegangen wird.

Bei der erfindungsgemäßen Flammstartanlage erfolgt somit eine Funktionskontrolle, die eine Funktionskontrolle des Glühelementes und eine Flammenerkennung umfaßt. Dadurch ist es möglich, über die gesamte Lebensdauer der Flammstartanlage Veränderungen festzustellen, bevor sie zu einem Startversagen der Brennkraftmaschine führen oder Schaden anrichten können. Derartige Veränderungen werden angezeigt, wenn sie bestimmte Grenzwerte über- oder unterschreiten. Über die zugehörige elektronische Steuerung können auch selbständig entsprechende Maßnahmen ergriffen werden, die beispielsweise in einem automatischen Wiederholstart bestehen können.

## Patentansprüche

1. Flammstartanlage für eine Verbrennungseinrichtung, insbesondere eine Brennkraftmaschine zum Vorwärmen der Verbrennungsluft mit einer Flammglühkerze, die im Verbrennungsluftkanal der Verbrennungseinrichtung angeordnet ist, Kraftstoff- und Stromversorgungseinrichtungen für die Flammglühkerze und einer Steuer- oder Regeleinrichtung zum Steuern oder Regeln der Kraftstoff- und Stromversorgung der Flammglühkerze, gekennzeichnet durch einen Glühelementüberwachungssensor (C1), der die Temperatur des Glühelementes der Flammglühkerze (1) überwacht, und einen Flammüberwachungssensor (C2), der die Ausbildung der Flamme der Flammglühkerze (1) überwacht, wobei die Ausgangssignale des Glühelementüberwachungssensors (C1) und des Flammüberwachungssensors (C2) an einer Überwachungseinrichtung (A2) liegen, die die Funktion der Flammstartanlage überwacht und auftretende Funktionsfehler meldet.

2. Flammstartanlage nach Anspruch 1, dadurch gekennzeichnet, daß bei einer Flammglühkerze mit einem Heizstab, der in Reihe geschaltete Heiz- und Regelwendeln enthält, die Heizstabtemperatur aus dem Regelwendelwiderstand und/oder dem Heizwendelwiderstand ermittelt und der Überwachungseinrichtung (A2) gemeldet wird.

3. Flammstartanlage nach Anspruch 1, dadurch gekennzeichnet, daß der Glühelementüberwachungssensor ein Mantelthermoelement (3) ist, das an das Glührohr der Flammglühkerze (1) geschweißt ist.

4. Flammstartanlage nach Anspruch 1, dadurch gekennzeichnet, daß der Flammüberwachungssensor eine Ionisationselektrode (5) ist.

5. Flammstartanlage nach Anspruch 4, dadurch gekennzeichnet, daß die Ionisationselektrode (5) im Abstand von der Flammglühkerze (1) im Ansaugtrakt der Verbrennungseinrichtung angeordnet ist.

6. Flammstartanlage nach Anspruch 1, dadurch gekennzeichnet, daß der Flammüberwachungssensor in die Flammglühkerze integriert ist.

7. Flammstartanlage nach einem der vorhergehenden Ansprüche, dadurch gekennzeichnet, daß die Überwachungseinrichtung (A2) bei fehlender Flammenbildung einen Wiederholstart der Steuereinrichtung (A1) auslöst.

8. Flammstartanlage nach einem der vorhergehenden Ansprüche, dadurch gekennzeichnet, daß die Überwachungseinrichtung (A2) Fehlermeldungen an einer Anzeige (A3) anzeigt.

9. Flammstartanlage nach einem der vorhergehenden Ansprüche, dadurch gekennzeichnet, daß die Überwachungseinrichtung (A2) Fehlermeldungen in einem Speicher abspeichert.

10. Flammstartanlage nach einem der vorhergehenden Ansprüche, dadurch gekennzeichnet, daß die Überwachungseinrichtung (A2) zur Fehlermeldung die Sensorsignale logisch miteinander und/oder mit bestimmten Grenzwerten verknüpft.

## Claims

1. Flame starting system for a combustion device, especially an internal combustion engine, for preheating the combustion air, having a flame glow plug which is arranged in the combustion air channel of the combustion device, fuel and current supply devices for the flame glow plug and a control or regulating device for controlling or regulating the fuel and current supply to the flame glow plug, characterised by a glow element monitoring sensor (C1) which monitors the temperature of the glow element of the flame glow plug (1), and a flame monitoring sensor (C2) which monitors the formation of the flame of the flame glow plug (1), the output signals of the glow element monitoring sensor (C1) and of the flame monitoring sensor (C2) being supplied to a monitoring device (A2) which monitors the functioning of the flame starting system and signals any operating errors that occur.

2. Flame starting system according to Claim 1, characterised in that, in the case of a flame glow plug having a heating rod which contains series-connected heating and regulating spirals, the heating rod temperature is determined from the regulating spiral resistance and/or from the heating spiral resistance and is signalled to the monitoring device (A2).

3. Flame starting system according to Claim 1, characterised in that the glow element monitoring sensor is a sheathed thermocouple (3) which is welded to the glow tube of the flame glow plug (1).

4. Flame starting system according to Claim 1, characterised in that the flame monitoring sensor is an ionisation electrode (5).

5. Flame starting system according to Claim 4, characterised in that the ionisation electrode (5) is arranged at a distance from the flame glow plug (1) in the induction tract of the combustion device.

6. Flame starting system according to Claim 1, characterised in that the flame monitoring sensor is integrated in the flame glow plug.

7. Flame starting system according to any one of the preceding claims, characterised in that the monitoring device (A2) triggers a repeat start of the control device (1) if no flame is formed.

8. Flame starting system according to any one of the preceding claims, characterised in that the monitoring device (A2) indicates error messages on a display (A3).

9. Flame starting system according to any one of the preceding claims, characterised in that the monitoring device (A2) stores error messages in a memory.

10. Flame starting system according to any one of the preceding claims, characterised in that the monitoring device (A2) links the sensor signals logically to one another and/or to specific limiting values for error indication.

## Revendications

1. Installation de démarrage par flamme pour un dispositif de combustion interne, en particulier un moteur à combustion interne, destinée au préchauffage de l'air de combustion, comprenant une bougie de préchauffage à flamme, qui est montée dans la conduite d'aspiration d'air du dispositif de combustion interne, des dispositifs d'alimentation en carburant et d'alimentation en énergie électrique pour la bougie de préchauffage à flamme, et un dispositif de commande ou de réglage destiné à commander ou régler l'alimentation en carburant et l'alimentation en énergie électrique de la bougie de préchauffage à flamme, caractérisée par un capteur de contrôle de l'élément de préchauffage (C1), qui surveille la température de l'élément de préchauffage de la bougie de préchauffage à flamme (1), et un capteur de contrôle de la flamme (C2), qui surveille la formation de la flamme de la bougie de préchauffage à flamme (1), les signaux de sortie du capteur de contrôle de l'élément de préchauffage (C1) et du capteur de contrôle de la flamme (C2) étant émis vers un dispositif de contrôle (A2), qui contrôle le fonctionnement de l'installation de démarrage par flamme et signale les incidents de fonctionnement qui se manifestent.

2. Installation de démarrage par flamme selon la revendication 1, caractérisée en ce que, dans une bougie de préchauffage à flamme comprenant une cartouche chauffante, qui contient un filament chauffant et un filament de réglage couplés en série, la température de la cartouche chauffante est déterminée à partir de la résistance du filament de réglage et/ou de la résistance du filament chauffant et communiquée au dispositif de contrôle (A2).

3. Installation de démarrage par flamme selon la revendication 1, caractérisée en ce que le capteur de contrôle de l'élément de préchauffage est un couple thermoélectrique enrobé (3), qui est soudé contre le tube incandescent de la bougie de préchauffage à flamme (1).

4. Installation de démarrage par flamme selon la revendication 1, caractérisée en ce que le capteur de contrôle de la flamme est une électrode d'ionisation (5).

5. Installation de démarrage par flamme selon la revendication 4, caractérisée en ce que l'électrode d'ionisation (5) est montée à distance de la bougie de préchauffage à flamme (1) dans le système d'aspiration du dispositif de combustion interne.

6. Installation de démarrage par flamme selon la revendication 1, caractérisée en ce que le capteur de contrôle de la flamme est intégré dans la bougie de préchauffage à flamme.

7. Installation de démarrage par flamme selon l'une quelconque des revendications précédentes, caractérisée en ce que le dispositif de contrôle (A2) déclenche un processus de démarrage répété du dispositif de commande (A1) lorsque la tlamme n'a pas été formée.

8. Installation de démarrage par flamme selon l'une quelconque des revendications précédentes, caractérisée en ce que le dispositif de contrôle (A2) affiche des messages d'erreur sur un tableau de signalisation (A3).

9. Installation de démarrage par flamme selon l'une quelconque des revendications précédentes, caractérisée en ce que le dispositif de contrôle (A2) enregistre des messages d'erreurs dans une mémoire.

10. Installation de démarrage par flamme selon l'une quelconque des revendications précédentes, caractérisée en ce que, pour émettre des messages d'erreurs, le dispositif de contrôle (A2) combine de manière logique les signaux des capteurs les uns avec les autres et/ou avec des valeurs limites déterminées.
